# EUROPEAN PATENT APPLICATION

(11) **EP 4 733 050 A1**
(43) Date of publication of application: **29.04.2026**
(21) Application number: 24851503.3
(22) Date of filing: 10.07.2024
(51) Int. Cl.: B29D 30/30

(54) **PRODUCTION DEVICE AND METHOD FOR CYLINDRICAL TIRE MEMBER**

(30) Priority: 08.08.2023 JP 2023129626
(71) Applicant: The Yokohama Rubber Co., Ltd., Hiratsuka-shi, Kanagawa 254-8601 (JP)
(72) Inventor: KONDO, Masatomo, Hiratsuka-shi, Kanagawa 254-8601 (JP); MATSUMURA, Kensuke, Hiratsuka-shi, Kanagawa 254-8601 (JP); NUMAZAKI, Yasushi, Hiratsuka-shi, Kanagawa 254-8601 (JP); KAWAI, Masahiro, Hiratsuka-shi, Kanagawa 254-8601 (JP); OISHI, Junpei, Hiratsuka-shi, Kanagawa 254-8601 (JP); ZENYOJI, Chihiro, Hiratsuka-shi, Kanagawa 254-8601 (JP); WATANABE, Takehiro, Hiratsuka-shi, Kanagawa 254-8601 (JP); SAITO, Dai, Hiratsuka-shi, Kanagawa 254-8601 (JP); MATSUMARU, Teruaki, Hiratsuka-shi, Kanagawa 254-8601 (JP); ONISHI, Kohei, Hiratsuka-shi, Kanagawa 254-8601 (JP); WATANABE, Masayuki, Hiratsuka-shi, Kanagawa 254-8601 (JP)
(74) Representative: Dilg, Haeusler, Schindelmann Patentanwaltsgesellschaft mbH
(86) International application number: PCT/JP2024/024873
(87) International publication number: WO 2025/033074

(57) **Abstract**

Provided is a manufacturing device and method for a cylindrical tire member that has a simple configuration, can move a forming drum body in a drum width direction, position a supplied band-like tire material at a reference position of the forming drum body, wind the band-like tire material around the forming drum body, and accurately grasp a positioning degree thereof. A forming drum body (6) and sensors (10a, 10b) are moved in the drum width direction by a drum movement mechanism (7), widthwise position data of a tire material (M1) supplied in a flat state by a conveyor (16a) on the forming drum body (6) is successively detected by the sensors (10a, 10b), and based on data on a widthwise installation position of the sensors (10a, 10b) with respect to the forming drum body (6) and the widthwise position data of the tire material (M1) successively input to a control unit (17), a widthwise position of the tire material (M1) over its entire length with respect to a reference position in a width direction of the forming drum body (6).

## Description

### Technical Field

The present invention relates to a manufacturing device and method for a cylindrical tire member and particularly relates to a manufacturing device and method for a cylindrical tire member that has a simple configuration, can move a forming drum body in a drum width direction, position a band-like tire material supplied in a flat state by a conveyor at a reference position in a width direction of a forming drum, wind the band-like tire material around the forming drum body, and accurately grasp a positioning degree thereof.

### Background Art

A green tire is vulcanized to manufacture a tire. A green tire is formed by layering a large number of types of tire materials. To prevent the tire material from meandering in winding a band-like tire material supplied in a flat state by a conveyor around a forming drum and forming the tire material into a cylindrical shape, various types of aligning a widthwise center position of the supplied tire material with a widthwise center position of the forming drum and winding the band-like tire material around the forming drum have been proposed (see, for example, Patent Document 1). Conventionally, as proposed in Patent Document 1, the widthwise center position of the tire material is sequentially calculated based on widthwise position data of the tire material placed on the conveyor detected by a measuring apparatus (sensor). The difference between the calculated widthwise center position of the tire material and the widthwise center position of the forming drum is sequentially calculated, and the conveyor is moved in the width direction so as to make the difference zero.

In the case where the difference between the widthwise center positions of the forming drum and the tire material in the width direction is made zero by moving the forming drum in the width direction instead of moving the conveyor in the width direction, it is necessary to successively calculate the widthwise center position of the tire material as described above and successively calculate the widthwise center position of the forming drum. Therefore, computational processing becomes complicated, and if there is an error in the calculation of the widthwise center position of either one of both the widthwise center positions, the tire material cannot be wound with high accuracy by making the difference between the both zero. Even controlling the movement of the forming drum in the width direction in this manner and winding the tire material does not make it possible to grasp how accurately the widthwise center position of the tire material is actually positioned and wound with respect to the widthwise center position (reference position) of the forming drum unless detecting a position of the tire material on the forming drum. Therefore, there is room for improvement in moving the forming drum in the drum width direction, positioning the band-like tire material at the reference position in the width direction of the forming drum, winding the band-like tire material around the forming drum body, and accurately grasping the positioning degree thereof while having a simple configuration.

### Citation List

### Patent Literature

Patent Document 1: JP 2017-127986 A

### Summary of Invention

### Technical Problem

An object of the present invention is to provide a manufacturing device and method for a cylindrical tire member that has a simple configuration and can move a forming drum body in a drum width direction, position a band-like tire material supplied in a flat state by a conveyor at a reference position in a width direction of the forming drum body, wind the band-like tire material around the forming drum body, and accurately grasp a positioning degree thereof.

### Solution to Problem

To achieve the object described above, a manufacturing device for a cylindrical tire member according to an embodiment of the present invention includes a conveyor configured to supply a tire material with a band shape in a flat state a forming drum body around which the tire material supplied by the conveyor is wound and formed into a cylindrical shape and a drum movement mechanism configured to move the forming drum body in a drum width direction. The manufacturing device includes: a sensor configured to detect the tire material on the forming drum body, a control unit to which widthwise position data of the tire material on the forming drum detected by the sensor is successively input, and a connecting portion configured to connect the forming drum body and the sensor and move the sensor in the drum width direction together with the forming drum body. Moving the forming drum body in the drum width direction allows meandering to be reduced and allows the tire material to be wound around the forming drum body, and
based on data on a widthwise installation position of the sensor with respect to the forming drum body and the widthwise position data successively input to the control unit, the control unit calculates a widthwise position of the tire material over its entire length with respect to a reference position in a width direction of the forming drum body.

A manufacturing method for a cylindrical tire member according to an embodiment of the present invention includes, in winding a tire material having a band shape supplied in a flat state by a conveyor around a forming drum body to form into a cylindrical shape, moving the forming drum body in a drum width direction by a drum movement mechanism, reducing meandering, and winding the tire material around the forming drum body. The manufacturing method includes: connecting the forming drum body and the sensor by a connecting portion and moving the sensor in the drum width direction together with the forming drum body by the drum movement mechanism, successively inputting widthwise position data of the tire material on the forming drum body detected by the sensor to a control unit, and based on data on a widthwise installation position of the sensor with respect to the forming drum body and the widthwise position data successively input to the control unit, calculating, by the control unit, a widthwise position of the tire material over its entire length with respect to a reference position in a width direction of the forming drum body.

### Advantageous Effects of Invention

An embodiment of the present invention, moves the forming drum body in the drum width direction in winding the tire material around the forming drum body, which is advantageous in reducing meandering, positioning the tire material at a reference position in the width direction of the forming drum body and winding the tire material around the forming drum body. Since the sensor and the forming drum body are connected to each other and move together in the drum width direction, the widthwise installation position data of the sensor with respect to the forming drum body is invariable regardless of the presence of the movement of the forming drum body in the width direction, and the difference from the reference position of the forming drum body is a known value grasped in advance. Therefore, it is advantageous to accurately calculate, based on the widthwise installation position data of the sensor with respect to the forming drum body and the widthwise position data successively input to the control unit, the position of the tire material in the width direction over the entire length of the tire material with respect to the reference position of the forming drum body. That is, it is possible to accurately grasp how much the widthwise position of the tire material wound around the forming drum body coincides (is deviated) with the reference position, thereby ensuring the quality. In this manner, the configuration in which the sensor and the forming drum body are connected and both are moved together in the drum width direction is simple, and the tire material can be positioned at the reference position in the width direction of the forming drum body and wound around the forming drum body, and the positioning degree thereof can be accurately grasped.

### Brief Description of Drawings

FIG. 1 is an explanatory diagram illustrating an example of a manufacturing device for a cylindrical tire member according to an embodiment in a plan view.
FIG. 2 is an explanatory diagram illustrating the manufacturing device of FIG. 1 in a front view.
FIG. 3 is an explanatory diagram illustrating the manufacturing device of FIG. 1 in a side view.
FIG. 4 is an enlarged view of a drum unit of FIG. 1.
FIG. 5 is an explanatory diagram illustrating a state in which the drum unit of FIG. 1 is moved to one winding position in a plan view.
FIG. 6 is an explanatory diagram illustrating an example of the drum unit of FIG. 5 in a side view.
FIG. 7 is an explanatory view illustrating a state in which a tire material is wound around the forming drum body at the winding position of FIG. 5.
FIG. 8 is an explanatory diagram illustrating the drum unit of FIG. 7 in a side view.
FIG. 9 is an explanatory diagram illustrating a state in which the drum unit of FIG. 7 is moved to the other winding position in a plan view.
FIG. 10 is an explanatory diagram illustrating the drum unit of FIG. 9 in a side view.

### Description of Embodiments

Hereinafter, a manufacturing device and method for a cylindrical tire member according to an embodiment of the present invention will be described based on embodiments with reference to the drawings.

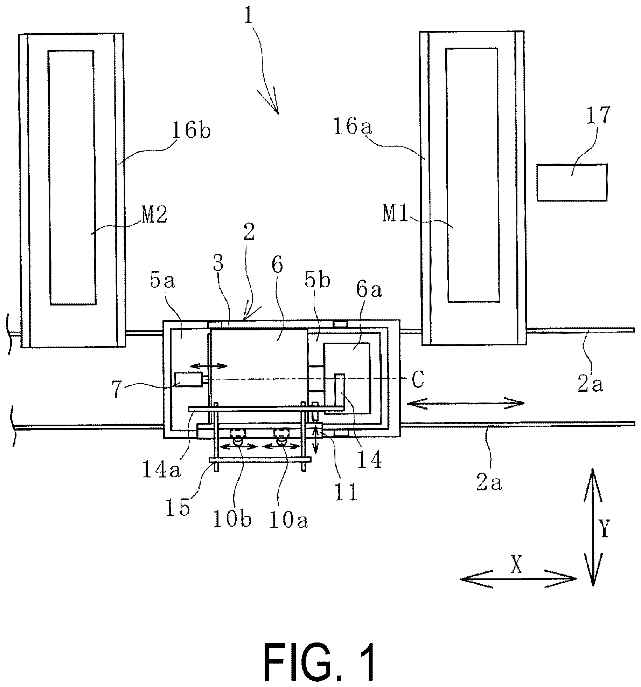

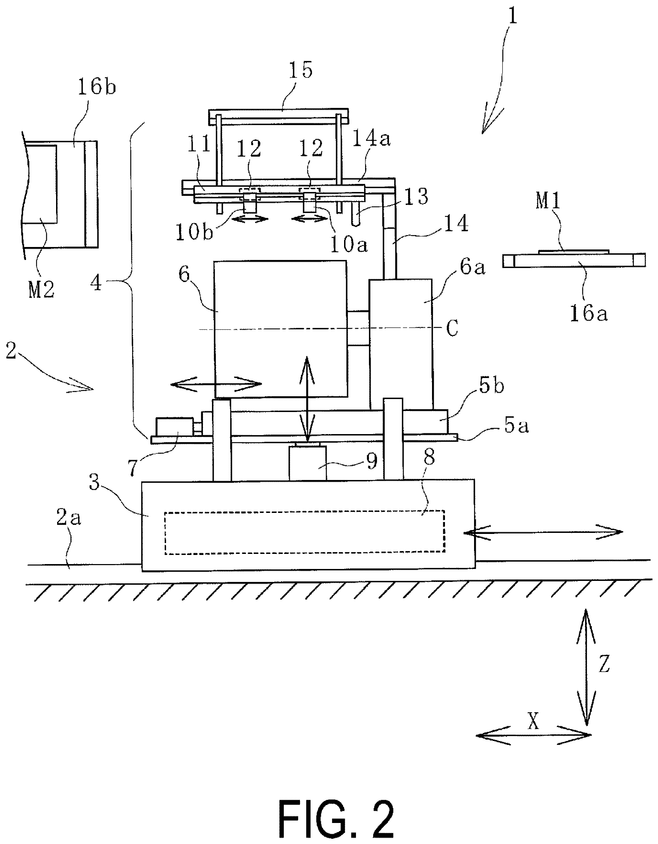

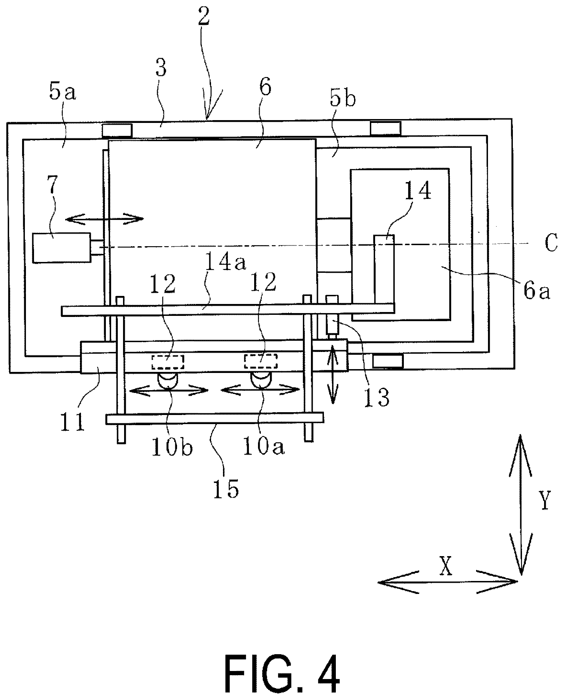

By using an embodiment of a manufacturing device 1 for a cylindrical tire member illustrated in FIGS. 1 to 4, the band-like tire materials M1 and M2 supplied by conveyors 16a and 16b are wound around a forming drum body 6 to manufacture a cylindrical tire member M. For example, an innerliner and a carcass material are used as the tire materials M1 and the M2, and are sequentially supplied to the forming drum body 6, and an innerliner layer and a carcass layer are manufactured and layered as the cylindrical tire member M. The innerliner layer and the carcass layer are used to form a green tire G. The formed green tire G is vulcanized to manufacture a tire T.

The manufacturing device 1 includes a drum unit 2 including the forming drum body 6, the conveyors 16a and 16b, and a control unit 17. The drum unit 2 is divided into a base portion 3 and an upper structure portion 4 in the vertical direction, and the base portion 3 and the upper structure portion 4 are connected by a vertical movement mechanism 9. The drum unit 2 is an entire structure including the base portion 3, the upper structure portion 4, and the vertical movement mechanism 9. X, Y, and Z arrows in the drawings respectively indicate the width direction, the front-rear direction, and the height direction of the manufacturing device 1 (the drum unit 2 and the forming drum body 6), and are directions orthogonal to each other. In the drawings, the direction from the conveyors 16a and 16b toward the forming drum body 6 in the front-rear direction (Y-direction) is the front.

The conveyors 16a and 16b are belt conveyors or similar conveying measures for supplying the tire materials M1 and M2 to the forming drum body 6 in a flat state. A plurality of conveyors 16a and 16b are arranged side by side in the width direction. Each of the conveyors 16a and 16b is basically fixed at a certain position on the ground and does not move. In this embodiment, leading ends of the respective conveyors 16a and 16b are set at substantially the same position in the front-rear direction, and are set at slightly different positions in the vertical direction. The leading ends of the respective conveyors 16a and 16b may be set at different positions in the front-rear direction, or may be set at substantially the same position in the vertical direction.

The base portion 3 is placed on a guide rail 2a extending in the width direction on the ground. A drive motor and the like constituting a slide movement mechanism 8 are installed on the base portion 3. As the slide movement mechanism 8, various known mechanisms for moving the base portion 3 along the guide rail 2a can be used. When the base portion 3 is moved along the guide rail 2a by the slide movement mechanism 8, the drum unit 2 is integrally moved in the width direction.

The upper structure portion 4 includes a placement plate 5a, a slide plate 5b, the forming drum body 6, a rotation drive portion 6a, a drum movement mechanism 7, sensors 10a and 10b (collectively referred to as a sensor 10), a sensor slide mechanism 12, and a sensor elevator mechanism 13. The vertical movement mechanism 9 is connected to the lower surface of the placement plate 5a, and the slide plate 5b and the drum movement mechanism 7 are installed on the placement plate 5b.

The slide plate 5b is moved in the width direction with respect to the placement plate 5a by the drum movement mechanism 7. The slide plate 5b is engaged with, for example, a groove or the like formed in the placement plate 5a and extending in the width direction. As the drum movement mechanism 7, various known mechanisms such as a fluid cylinder and a rod that is advanced and withdrawn by a servo motor can be used. The drum movement mechanism 7 is a mechanism different from the slide movement mechanism 8.

The forming drum body 6 and the rotation drive unit 6a are installed on the slide plate 5a. The tire materials M1 and M2 supplied by the conveyors 16a and 16b are wound around the forming drum body 6 to form a cylindrical shape. A drum axial center C of the forming drum body 6 extends in the X-direction. The forming drum body 6 is rotated about the drum axial center C by the rotation drive unit 6a.

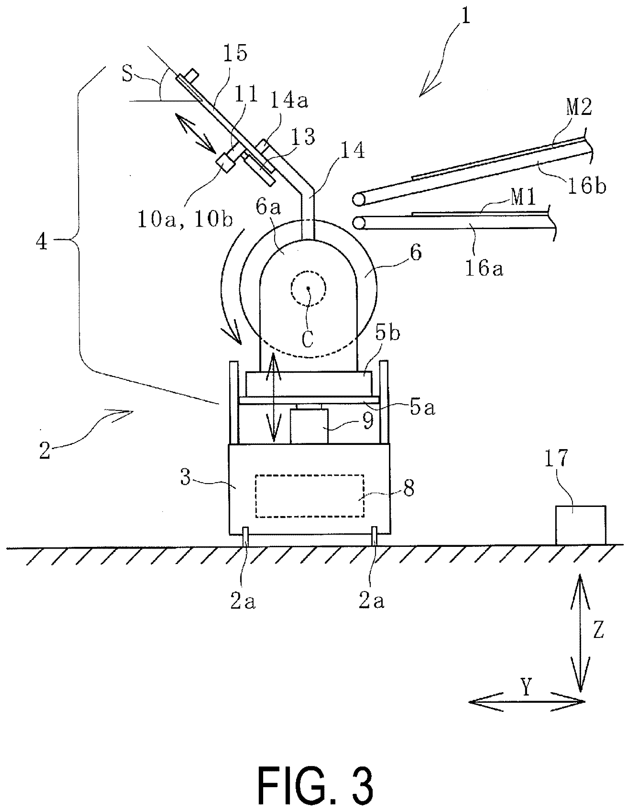

A supporting column 14 is erected on the rotation drive unit 6b, and a cross beam 14a extending in the width direction is connected to the supporting column 14. A portal-shaped supporting frame 15 is fixed to the cross beam 14a. A sensor supporting beam 11 extending in the width direction is bridged over the supporting frame 15. As illustrated in FIG. 3, the supporting column 14 is inclined upward toward the opposite side of the conveyors 16a and 16b at a position in the middle in the height direction, and an inclination angle S with respect to the horizontal direction is set to approximately 45° (for example, 30° or more and 60° or less). The supporting frame 15 is also inclined at the inclination angle S.

On the sensor supporting beam 11, two sensors 10a and 10b are installed spaced apart in the width direction. The sensors 10a and 10b are moved and fixed to desired positions in the width direction along the sensor supporting beams 11 by the respective sensor slide mechanisms 12. As the sensor slide mechanism 12, various known mechanisms such as a rod that is advanced and withdrawn by a servo motor and a fluid cylinder can be used.

The sensor supporting beam 11 is raised and lowered at the inclination angle S along the supporting frame 15 by the sensor elevator mechanism 13 and fixed at a desired position in the height direction. In this embodiment, the sensor elevator mechanism 13 is installed on the cross beam 14a, and its rod that is advanced and withdrawn is connected to the sensor supporting beam 11. As the sensor elevator mechanism 13, various known mechanisms such as a fluid cylinder and a rod that is advanced and withdrawn by a servo motor can be used. When the sensor supporting beam 11 is raised and lowered by the sensor elevator mechanism 13, the sensor 10 is raised and lowered at the inclination angle S and fixed at a desired position in the height direction. The sensor elevator mechanism 13 may be optionally provided.

The sensor 10 is disposed above the forming drum body 6, and detects the presence and the position of the tire materials M1 and M2 supplied to the forming drum body 6. As the sensor 10, various known non-contact type detection sensors may be used. In this embodiment, the sensors 10a and 10b are disposed at two positions spaced apart in the width direction (X-direction) in order to detect the entire range of each of the tire materials M1 and M2 in the width direction. The sensors 10a and 10b are moved in the width direction, whereby data of the position of the tire material M1 in the width direction with any width dimension can be accurately acquired. When each of the tire materials M1 and M2 can be detected by one sensor 10 over the entire range thereof in the width direction, the number of the sensors 10 may be one. Detection data from the sensor 10 is successively input into the control unit 17. The detection data includes the widthwise position data of the tire materials M1 and M2 on the forming drum body 6.

The control unit 17 performs computational processing using input data, stored data, and the like, and controls various components of the manufacturing device 1. Various known computers may be used as the control unit 17.

The vertical movement mechanism 9 vertically moves the upper structure portion 4 with respect to the base portion 3. As the vertical movement mechanism 9, various known mechanisms such as a fluid cylinder and a rod that is advanced and withdrawn by or a servo motor can be used. In this embodiment, the vertical movement mechanism 9 is interposed between the base portion 3 and the placement plate 5a.

Therefore, the upper structure portion 4 is integrally moved up and down by the vertical movement mechanism 9. Various components directly and indirectly connected to the slide plate 5b are integrally moved in the width direction by the drum movement mechanism 7. That is, the forming drum body 6 and the sensor 10 are moved synchronously by the same amount in the width direction by the drum movement mechanism 7.

In this embodiment, the slide plate 5b, the rotation drive unit 6a, the supporting column 14, the cross beam 14a, the supporting frame 15, and the sensor supporting beam 11 function as a connecting portion that connects the forming drum body 6 and the sensor 10 and move the sensor 10 in the width direction together with the forming drum body 6. For example, the supporting column 14 may be directly erected on the slide plate 5b, not on the rotation drive unit 6a, so that the forming drum body 6 and the sensor 10 are indirectly connected to each other, and the sensor 10 may be moved in the width direction together with the forming drum body 6.

Next, an example of a procedure of manufacturing the cylindrical tire member M using this manufacturing device 1 will be described.

In this embodiment, the tire materials M1 and M2 are supplied to the forming drum body 6 in a flat state by the plurality of conveyors 16a and 16b arranged side by side in the width direction with respect to the forming drum body 6 and wound around the forming drum body 6. When the respective tire materials M1 and M2 are supplied, the forming drum body 6 is moved to and installed in the vicinity of leading edge portions (winding positions P1 and P2) of the conveyors 16a and 16b that supply the tire materials M1 and M2.

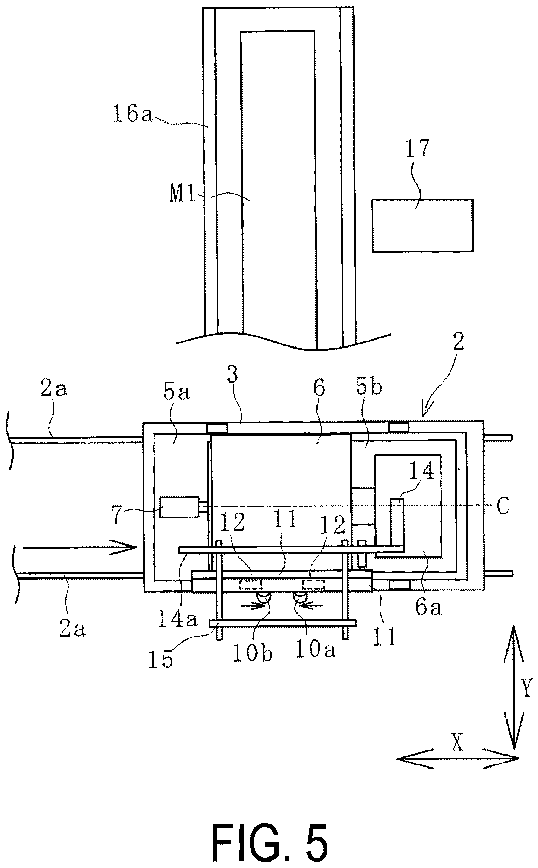

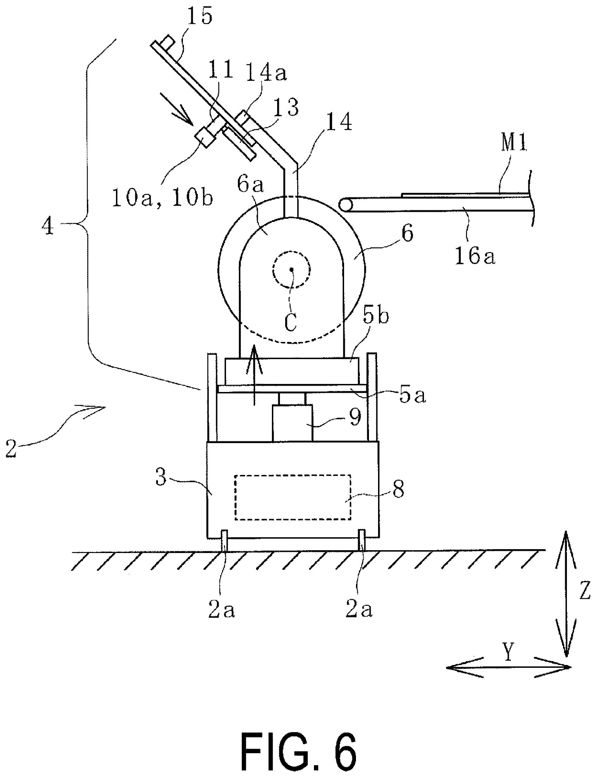

First, as illustrated in FIGS. 5 and 6, the forming drum body 6 is moved to and installed at the winding position P1 in the vicinity of the leading edge portion of the conveyor 16a that supplies the tire material M1 to the forming drum body 6. Therefore, as illustrated in FIG. 5, the drum unit 2 is moved as a whole unit in the width direction by the slide movement mechanism 8 and positioned at the winding position P1 (X-direction position). As illustrated in FIG. 6, the upper structure portion 4 is moved in the vertical direction by the vertical movement mechanism 9 and is positioned at the winding position P1 (Z-direction position). The winding position P1 is an appropriate position where the tire material M1 can be smoothly transferred from the conveyor 16a to the forming drum body 6.

The position of the leading edge portion of the conveyor 16a (positions in the X-direction, the Y-direction, and the Z-direction) is preset, and the position of the forming drum body 6 in the Y-direction is also preset. Therefore, the winding position P1 is determined in advance by performing a preliminary test or the like in which the tire material M1 is transferred from the conveyor 16a to the forming drum body 6 while variously changing the position (positions in the X-direction and Z-direction) of the forming drum body 6. The winding position P2 is determined in the same manner for the other conveyor 16b.

By determining the winding position P1 in advance in this manner, when the tire material M1 is supplied to the forming drum body 6, the widthwise position of the forming drum body 6 is adjusted using the slide movement mechanism 8, and the position of the forming drum body 6 in the vertical direction is adjusted using the vertical movement mechanism 9, thereby installing the forming drum body 6 at the winding position P1. To be specific, in order to install the forming drum body 6 at the winding position P1, the control unit 17 controls the slide movement mechanism 8 to adjust the position of the forming drum body 6 in the width direction based on the position of the leading edge portion of the conveyor 16a in the width direction which supplies the tire material M1. The position of the forming drum body 6 in the vertical direction is adjusted by controlling the vertical movement mechanism 9 by the control unit 17 based on the position of the leading edge portion of the conveyor 16a in the vertical direction. By controlling in this manner, the forming drum body 6 can be automatically installed at the winding position P1. In order to more quickly set the forming drum body 6 at the winding position P1, it is preferable to move the forming drum body 6 in the vertical direction by the vertical movement mechanism 9 and position the forming drum body 6 at the height position of the winding position P1 while moving the forming drum body 6 (drum unit 2) in the width direction toward the winding position P1 by the slide movement mechanism 8.

The sensor 10 is moved in the width direction by each sensor slide mechanism 12 and is raised and lowered by the sensor elevator mechanism 13 and moved and fixed to a detection position. The detection position is an appropriate position where the sensor 10 can accurately detect the positions of both ends of the tire material M1 in the width direction on the forming drum body 6. The detection position varies depending on the arrangement of the conveyor 16a with respect to the forming drum body 6, the size of the tire material M1 in the width direction, and the like. Therefore, by variously changing the position of the sensor 10 (the position in the X-direction, Y-direction, and Z-direction), a preliminary test or the like for detecting the tire material M1 on the forming drum body 6 is performed to determine the detection position in advance. A detection position is determined in the same manner for the other conveyor 16b and the tire material M2. While the forming drum body 6 (drum unit 2) is moved in the width direction toward the winding position P1 by the slide movement mechanism 8, the sensor 10 may be moved to the detection position. The detection position is stored in the control unit 17.

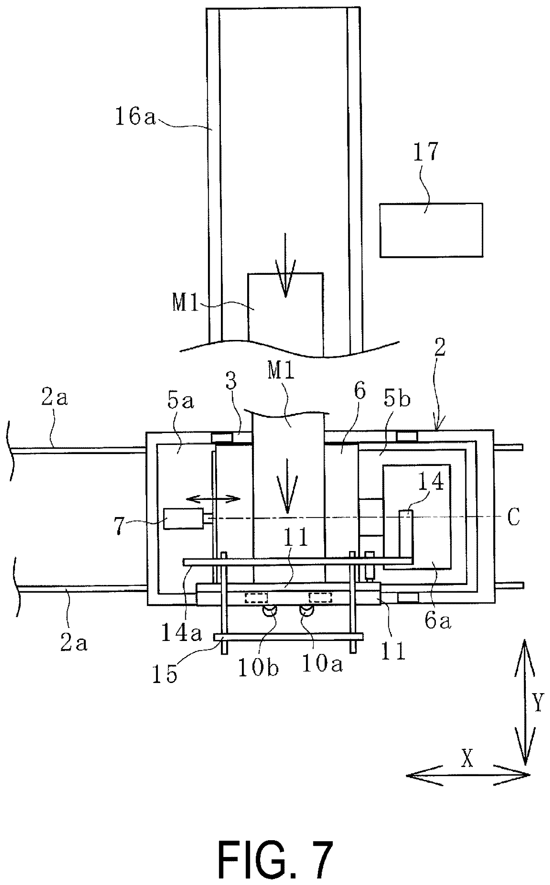

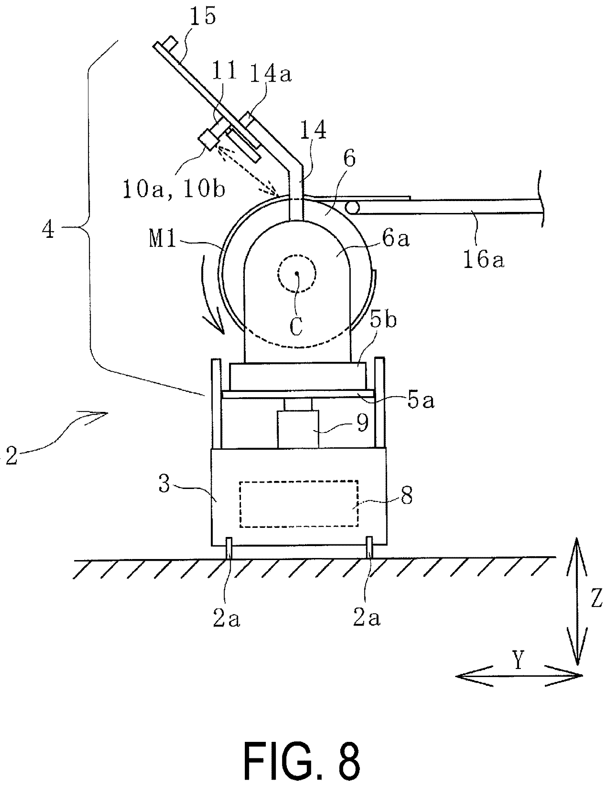

Next, as illustrated in FIGS. 7 and 8, the forming drum body 6 is rotated about the drum axial center C at the winding position P1, and the tire material M1 supplied by the conveyor 16a is wound. The tire material M1 placed on the conveyor 16a meanders in the width direction to a certain extent. Therefore, the widthwise position of the tire material M1 on the conveyor 16a and the like is detected by known sensors, and the control unit 17 controls the drum movement mechanism 7 to move the forming drum body 6 in the width direction. In this manner, the tire material M1 is positioned at a reference position Px in the width direction of the forming drum body 6 and wound therearound while reducing meandering. The reference position Px can be set to any position. For example, a widthwise center position of the forming drum body 6 preset to the reference position Px, and the tire material M1 is positioned such that a widthwise center position of the tire material M1 coincides with the reference position Px, and is wound around the forming drum body 6 to be formed into a cylindrical shape.

Even when the tire material M1 is positioned in this manner and wound around the forming drum body 6, it is unclear how much the widthwise center position of the actually wound tire material coincides with (is displaced from) the reference position Px. In this embodiment, based on widthwise installation position data of the sensor 10 with respect to the forming drum body 6 and widthwise position data of the tire material M1 on the forming drum body 6 detected by the sensor 10 and successively input to the control unit 17, the control unit 17 calculates the widthwise position of the tire material M1 over its entire length with respect to the reference position Px of the forming drum body 6.

Specifically, based on the widthwise installation position data of the sensor 10 with respect to the forming drum body 6, the widthwise center position of the forming drum body 6 (that is, the reference position Px) is calculated. Based on the widthwise position data of the tire material M1 successively detected by the sensors 10a and 10b during the period from the start to the end of the winding of the tire material M1 around the forming drum body 6, the control unit 17 successively calculates the widthwise center position of the tire material M1 over its entire length on the forming drum body 6. A difference Dx in the width direction between the calculated reference position Px and the calculated widthwise center position of the tire material M1 is calculated over the entire length of the tire material M1.

Here, since the sensor 10 and the forming drum body 6 are connected to each other and move together in the width direction, the widthwise installation position data of the sensor 10 with respect to the forming drum body 6 remains unchanged regardless of whether the forming drum body 6 moves in the width direction or not. Since the position of each sensor 10 is stored in the control unit 17 and is known, the distances in the width direction between each sensor 10 and the reference position Px of the forming drum body 6 are also known values. In other words, the reference position Px is accurately grasped based on the position of each sensor 10. Therefore, in order to calculate the difference Dx, the reference position Px that has been accurately grasped based on the position of each sensor 10 may be used. That is, based on the widthwise position data of the tire material M1 successively detected by the sensor 10, the widthwise center position of the tire material M1 over its entire length on the forming drum body 6 is calculated, and the above-described difference Dx can be calculated as a difference between the calculation result and the reference position Px accurately grasped based on the position of each sensor 10 stored in the control unit 17.

Therefore, although the manufacturing device 1 has a simple configuration in which the sensor 10 and the forming drum body 6 are connected to each other and the sensor 10 is moved in the width direction together with the forming drum body 6, the manufacturing device 1 is advantageous in accurately calculating the widthwise position of the tire material M1 over its entire length with respect to the reference position Px even in frequently moving the forming drum body 6 in the width direction. That is, it is possible to accurately grasp how much the widthwise center position of the tire material M1 wound around the forming drum body 6 coincides (is deviated) with the reference position Px, thereby ensuring the quality of the manufactured cylindrical tire member M. Moreover, the sensors 10a and 10b each successively detect the widthwise position data of the tire material M1 from the start to the end of the winding of the tire material M1 around the forming drum body 6, eliminating a separate process (time) for calculating the widthwise position of the tire material M1 over its entire length with respect to the reference position Px.

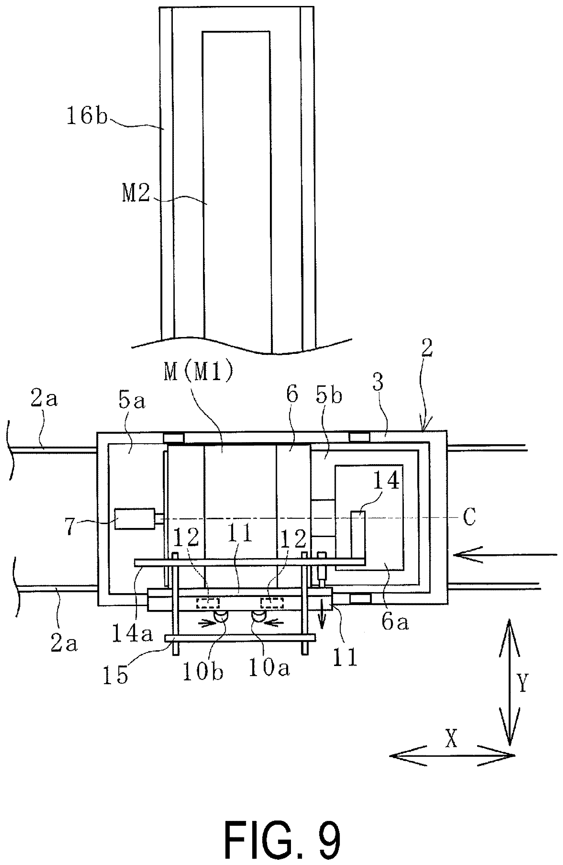

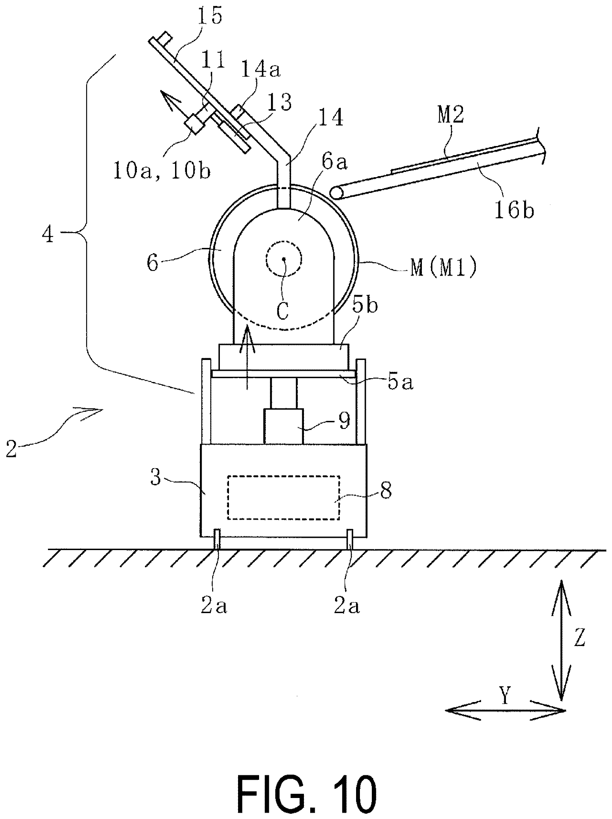

Next, as illustrated in FIGS. 9 and 10, in order to manufacture the cylindrical tire member M by the tire material M2 supplied from the other conveyor 16b, the forming drum body 6 is moved to the winding position P2 in the vicinity of the leading edge portion of the other conveyor 16b. The procedure for installing the forming drum body 6 at the winding position P2 is the same as the procedure for installing the forming drum body 6 at the winding position P1 described above. That is, as illustrated in FIG. 9, the drum unit 2 is integrally moved in the width direction by the slide movement mechanism 8. As illustrated in FIG. 10, the upper structure portion 4 is moved in the vertical direction by the vertical movement mechanism 9.

The procedure of moving the sensors 10a and 10b to the detection position and fixing them is also the same as the procedure performed at the winding position P1. That is, the sensors 10a and 10b are moved in the width direction by the sensor slide mechanism 12, and are raised and lowered by the sensor elevator mechanism 13, and are fixed at the detection positions corresponding to the conveyor 16 and the tire material M2.

Next, using the same procedure as in the case of the tire material M1 described above, moving the forming drum body 6 in the width direction by the drum movement mechanism 7 allows meandering to be reduced and allows the tire material M2 to be positioned at the reference position Px in the width direction of the forming drum body 6 and wound around the forming drum body 6. Since the cylindrical tire member M has already been manufactured and wound around the forming drum body 6, the tire material M2 is wound around an outer circumferential surface of the tire member M at the winding position P2. Therefore, at the winding position P2, the tire member M formed into a cylindrical shape by the tire material M2 is manufactured in a state of being layered on the tire member M already manufactured on the forming drum body 6. Since the displacement in the width direction of each of the layered tire members M1 is suppressed, a high-quality multilayer structure of the tire members M is manufactured. For the tire material M2, similar to the tire material M1, the difference Dx in the width direction between the reference position Px and the calculated widthwise center position of the tire material M2 is calculated over the entire length of the tire material M2.

In this embodiment, the sensor 10 is raised and lowered at the inclination angle S, and this up-down movement allows the positions of the sensor 10 in the height direction (Z-direction) and the front-rear direction (Y-direction) to be adjusted at the same time. Therefore, by appropriately setting the inclination angle S, it is advantageous to quickly move and fix the sensor 10 to the detection position corresponding to the arrangement of the conveyors 16a and 16b with respect to the forming drum body 6.

In this embodiment, at the winding positions P1 and P2, the forming drum body 6 is moved in the width direction by the drum movement mechanism 7, whereby the tire materials M1 and M2 can be wound around the forming drum body 6 while correcting the variation in the widthwise positions of the tire materials M1 and M2. The drum movement mechanism 7 moves not the drum unit 2 but the components of the drum unit 2 installed on the slide plate 5 in the width direction, and therefore, is advantageous in moving the forming drum body 6 to a desired position in the width direction more quickly and frequently than the drum unit 2.

In FIG. 1, the conveyor 16a is disposed at one of two positions spaced apart in the width direction, and the conveyor 16b is disposed at the other position. However, the number of the conveyors 16a and 16b disposed at the respective positions is not limited to one, and a plurality of (for example, two to four) conveyors may be disposed in tandem. In the case where a plurality of conveyors 16a are arranged in tandem at one of the positions, a plurality of tire materials M1 are sequentially and continuously supplied to the forming drum body 6 by the respective conveyors 16a arranged in tandem, and each of the tire materials M1 is formed into a cylindrical shape and layered. As in the above-described embodiment, by moving the forming drum body 6 in the width direction with respect to each conveyor 16a fixed at a predetermined position, the tire materials M1 continuously supplied are sequentially positioned at the reference position Px in the width direction of the forming drum body 6 and wound while reducing meandering. That is, when the plurality of tire materials M1 sequentially supplied are centered and wound around the forming drum body 6, the position of each conveyor 16a arranged in tandem is fixed. Therefore, each tire material M1 can be continuously supplied to the forming drum body 6 through each conveyor 16a.

On the other hand, in a method of causing the forming drum body 6 to be fixed at a predetermined position, moving the conveyor 16a directly in front of the forming drum body 6 in the width direction, and thus centering and winding each of the sequentially-supplied tire materials M1 around the forming drum body 6, the tire material M1 cannot be transferred from the rear conveyor 16a to the conveyor 16a directly in front of the forming drum body 6, while the conveyor 16a directly in front of the forming drum body 6 is moved in the width direction. As a result, the supply of the tire material M1 to the forming drum body 6 is delayed, and an extra waiting time is generated until the centering step by the conveyor 16a directly in front is completed. This reduces productivity of the cylindrical tire member M. Therefore, as described above, in the method of moving the forming drum body 6 in the width direction with respect to each conveyor 16a fixed at a predetermined position, thus reducing meandering, positioning the tire material M1 sequentially and continuously supplied at the reference position Px in the width direction of the forming drum body 6, and winding the tire material M1 around the forming drum body 6, an extra waiting time until each tire material M1 is supplied to the forming drum body 6 is reduced, which is advantageous for improving the productivity of the cylindrical tire member M. The same applies to the case where a plurality of conveyors 16b are disposed in tandem at the other position, and in the method in which the forming drum body 6 is moved in the width direction with respect to the conveyors 16b fixed at a predetermined position and disposed in tandem, and each of the plurality of tire materials M2 sequentially supplied are centered and wound around the forming drum body 6, which is advantageous in improving the productivity of the cylindrical tire member M.

In the embodiment, the leading ends of the respective conveyors 16a and 16b are set at positions above the forming drum body 6, but may also be set at positions below the forming drum body 6. The leading end of one conveyor 16a may be set at a position above the forming drum body 6, and the leading end of the other conveyor 16b may be set at a position below the forming drum body 6. The number of conveyors 16a and 16b is not limited to two, and the manufacturing device 1 can be applied to a case where the number of conveyors is one and a case where three or more conveyors are arranged side by side. When only one conveyor is provided, it is not necessary to move the drum unit 2 as a unit in the width direction, and thus unnecessary components such as the slide movement mechanism 8 can be omitted.

The forming drum body 6 is not limited to various known general forming drums, and may be, for example, a so-called rigid core having an outer surface substantially the same as the inner surface of the tire T to be manufactured.

### Reference Signs List

1 Manufacturing device
2 Drum unit
2a Guide rail
3 Base portion
4 Upper structure portion
5a Placement plate
5b Slide plate
6 Forming drum body
6a Rotation drive unit
7 Drum movement mechanism
8 Slide movement mechanism
9 Vertical movement mechanism
10 (10a, 10b) Sensor
11 Sensor supporting beam
12 Sensor slide mechanism
13 Sensor elevator mechanism
14 Supporting column
14a Crossbeam
15 Supporting frame
16a, 16b Conveyor
17 Control unit
M1, M2 Band-like tire material
M Tire member

## Claims

1. A manufacturing device for a cylindrical tire member comprising a conveyor configured to supply a tire material having a band shape in a flat state, a forming drum body around which the tire material supplied by the conveyor is wound and formed into a cylindrical shape, and a drum movement mechanism configured to move the forming drum body in a drum width direction, the manufacturing device comprising:
a sensor configured to detect the tire material on the forming drum body;
a control unit to which widthwise position data of the tire material on the forming drum detected by the sensor is successively input; and
a connecting portion configured to connect the forming drum body and the sensor and move the sensor in the drum width direction together with the forming drum body;
moving the forming drum body in the drum width direction by the drum movement mechanism allowing meandering to be reduced and allowing the tire material to be wound around the forming drum body, and
based on data on a widthwise installation position of the sensor with respect to the forming drum body and the widthwise position data successively input to the control unit, the control unit calculating a widthwise position of the tire material over its entire length with respect to a reference position in a width direction of the forming drum body.

2. The manufacturing device for a cylindrical tire member according to claim 1, comprising
a sensor slide mechanism configured to move the sensor in the drum width direction, wherein
the sensor is moved and fixed to a desired position in the drum width direction by the sensor slide mechanism.

3. The manufacturing device for a cylindrical tire member according to claim 1, wherein the sensor is disposed at two positions spaced apart in the drum width direction.

4. The manufacturing device for a cylindrical tire member according to claim 2, wherein the sensor is disposed at two positions spaced apart in the drum width direction.

5. The manufacturing device for a cylindrical tire member according to any one of claims 1 to 4, comprising
a sensor elevator mechanism configured to raise and lower the sensor, wherein
the sensor is disposed at a desired height position with respect to the forming drum body by the sensor elevator mechanism.

6. A manufacturing method for a cylindrical tire member, comprising, in winding a tire material having a band shape supplied in a flat state by a conveyor around a forming drum body to form into a cylindrical shape, moving the forming drum body in a drum width direction by a drum movement mechanism, reducing meandering, and winding the tire material around the forming drum body, the manufacturing method comprising:
connecting the forming drum body and the sensor by a connecting portion and moving the sensor in the drum width direction together with the forming drum body by the drum movement mechanism;
successively inputting widthwise position data of the tire material on the forming drum body detected by the sensor to a control unit; and
based on data on a widthwise installation position of the sensor with respect to the forming drum body and the widthwise position data successively input to the control unit, calculating, by the control unit, a widthwise position of the tire material over its entire length with respect to a reference position in a width direction of the forming drum body.
